# EUROPEAN PATENT SPECIFICATION

(11) **EP 1 325 095 B1**
(45) Date of publication and mention of the grant of the patent: **04.01.2006**
(21) Application number: 00970643.3
(22) Date of filing: 06.10.2000
(51) Int. Cl.: C09J 7/02

(54) **METHODS FOR MAKING GLASS FIBER REINFORCED MATERIALS**
VERFAHREN ZUR HERSTELLUNG VON GLASFASERVERSTÄRKTEN MATERIALIEN
PROCEDE DE FABRICATION DE MATERIAUX RENFORCES DE FIBRES DE VERRE

(43) Date of publication of application: 09.07.2003
(73) Proprietor: 3M Innovative Properties Company, St. Paul, Minnesota 55133-3427 (US)
(72) Inventor: CHRIST, Dennis, L., Scandia, MN 55073 (US); KRETOVICS, Tom, J., New Richmond, WI 54017 (US); MCCRACKEN, Shaun, D., Cottage Grove, MN 55016 (US); MOON, John, D., Hastings, MN 55033 (US)
(74) Representative: Vossius & Partner
(86) International application number: PCT/US2000/027733
(87) International publication number: WO 2002/031075

(56) References cited:
- EP-A- 0 447 115
- EP-A- 0 796 906

## Description

This invention relates to methods for making glass fiber reinforced materials, and, more particularly, to methods for making dispensable adhesives reinforced with inorganic fibers.

### BACKGROUND

Pressure sensitive adhesive transfer tapes are widely used for making flying splices in the printing and paper making industries. These high performance tapes should be aggressively adhesive and have high cohesive strength. In addition, transfer tapes should be cleanly dispensable from a bladeless adhesive transfer gun, and should not snap back to leave excess adhesive at the broken edge of the transferred strip of tape or at the gun orifice.

U.S. Patent No. 4,557,960 to Vernon et al. describes an adhesive transfer tape having an adhesive layer loaded with organic monofilament fibers of nylon, polyester, polypropylene, acetate, rayon and the like. The transfer tapes in the '960 patent are made by first mixing the monofilaments, which have an average diameter of 5-40 µm, into a partially photopolymerized, coatable, solvent-free monomeric syrup at a concentration of 0.1-5 volume percent This mixture is then coated onto a releasable backing through a metering orifice at a preferred thickness of 0.03-2 mm and subsequently finally photopolymerized to form a pressure sensitive adhesive layer with a thickness of about 0.125 mm.

However, if inorganic glass monofilaments of a similar size are mixed into a coatable, solvent free syrup at a similar concentration, the '960 patent teaches that the coating operation cannot be conducted because the long and relatively stiff glass fibers tend to clog the metering orifice of the coating apparatus.

To avoid this processing problem, conventional adhesive layer containing inorganic fibers are made by mixing the inorganic fibers into a solvent-based adhesive composition. The fibered adhesive composition is then coated onto a substrate using a knotched bar coating apparatus. The adhesive is thermally crosslinked and the solvent removed in a drying oven.

U.S. Patent No. 5,932,298 to Moon describes a process for making a hot melt adhesive composition in which a polymerizable pre-adhesive composition is disposed on a sheet and polymerized to form a hot meltable adhesive composition. The sheet is then removed and the hot meltable adhesive composition is melted in a heated extruder, bulk tank melter, melt-on-demand equipment or a hand-held hot melt adhesive gun.

### SUMMARY

The process for making an adhesive layer loaded with inorganic fibers using a solvent based adhesive composition has several disadvantages. Solvent coater line speed is limited to the diffusion rate of the solvent through the coating layer during the drying step. The solvent released during the drying and thermal crosslinking step is also incompatible with the environment. In addition, during the drying and crosslinking step, the fibers do not disperse uniformly, which leads to an adhesive product with a rough surface and inconsistent tensile strength characteristics.

The '298 patent to Moon broadly teaches that fibers may be incorporated into the polymerizable, pre-adhesive composition or added at the time of hot melt coating to change the properties of the adhesive. However, in light of the teaching of the '960 patent that transfer tapes with adhesive layers reinforced with fiber less than about 3 mm long may not be cleanly dispensable from an adhesive transfer gun, the process described in the '298 patent was thought to be ill suited for the production of adhesive layers loaded with inorganic fibers. Since inorganic fibers tend to be relatively brittle, hot melt coating with a heated extruder as taught in the '298 patent was expected to break the fibers into short lengths. In light of the teachings of the '960 patent, adhesives with these broken, short fibers of various lengths would be expected to produce a transfer tape with poor dispensability properties.

To the contrary, the present inventors have discovered that the process described in the '298 patent may be used to produce an inorganic fiber reinforced adhesive layer that may be used to make a transfer tape with excellent dispensability properties.

In one aspect, the invention is a process for making a fibered composition, including providing a coatable composition with a polymerizable adhesive composition and inorganic fibers; polymerizing the coatable composition to produce a fibered bulk polymer; and hot melt coating the fibered bulk polymer onto a substrate to form an adhesive layer. The fibers in the adhesive layer preferably have a mean fiber length of about 10 mils (0.25 mm) to about 60 mils (1.50 mm), and a range of fiber lengths from about 1 mil (0.025 mm) to about 100 mils (2.50 mm).

In another aspect, the invention is an inorganic fiber reinforced transfer tape made by the inventive process. This transfer tape has excellent dispensability properties.

Compared to conventional solvent-based adhesive processes, the inventive process increases coating line speed, which increases productivity and reduces the cost of the final coated product. In addition, the inventive process reduces solvent emissions and provides more uniform dispersion of the reinforcing fibers in the adhesive layer, which produces a smoother surface on the final coated product compared to solvent based adhesive processes.

The details of one or more embodiments of the invention are set forth in the description below. Other features, objects, and advantages of the invention will be apparent from the description and from the claims.

### DETAILED DESCRIPTION

The invention is a process for making a fibered composition that includes the steps of providing a polymerizable adhesive composition comprising a polymerizable composition and inorganic fibers; polymerizing the polymerizable composition to produce a fibered bulk polymer; and hot melt coating the fibered bulk polymer onto a substrate to form a fibered adhesive layer.

The components used in the polymerizable adhesive composition may vary widely depending on the intended application for the adhesive layer, and any monomeric component or mixture of monomeric components may be used that, prior to final polymerization, is capable of dispersing the fibers. The polymerizable adhesive composition preferably has a melting point of about 40°C or less, more preferably about 25°C or less. In a preferred embodiment, the melting point of the polymerizable adhesive composition is about 0°C or less. The polymerizable adhesive composition preferably has a viscosity at 25°C of less than about 50,000 centipoise (cps), more preferably less than about 5000 cps. The polymerizable adhesive composition may be a monomeric mixture or a prepolymeric mixture. A prepolymeric mixture has a syrup-like consistency created by the partial polymerization of the monomeric materials. The polymerizable adhesive composition preferably has a weight average molecular weight of about 500,000 to about 1.5 million, more preferable about 800,000 to about 1.2 million, and most preferably about 800,000 to about 1.0 million.

A small amount of volatile, non-polymerizable solvent may be included in the polymerizable adhesive composition to dissolve other additives, such as, for example, a crosslinking agent To enhance environmental compatibility, the polymerizable adhesive composition contains less than about 10% by weight of solvent, preferably less than about 5% by weight of solvent, and more preferably less than about 1% by weight of solvent.

Preferred polymerizable materials that may be used in the polymerizable adhesive composition to produce a hot meltable pressure sensitive adhesive bulk polymer include acrylate and methacrylate polymers and co-polymers. These pressure sensitive adhesive bulk polymers can be formed by polymerizing a polymerizable composition including at least 50 and up to 100 parts by weight of one or more monomeric acrylic or methacrylic esters of non-tertiary alkyl alcohols, with the alkyl groups having from 1 to 20 carbon atoms, preferably from 3 to 18 carbon atoms. Suitable acrylate monomers for use in the polymerizable adhesive composition include methyl acrylate, ethyl acrylate, n-butyl acrylate, lauryl acrylate, 2-ethylhexyl acrylate, cyclohexyl acrylate, iso-octyl acrylate, octadecyl acrylate, nonyl acrylate, decyl acrylate, isobornyl acrylate, and dodecyl acrylate. Also useful are aromatic acrylates such as, for example, benzyl acrylate.

Optionally, the polymerizable adhesive composition may include about 0 to about 50 parts by weight of one or more monoethylenically unsaturated co-monomers that may be polymerized with the acrylate monomers. One class of co-monomers has a homopolymer glass transition temperature greater than the glass transition temperature of the acrylate homopolymer. Examples of suitable co-monomers include acrylic acid, acrylamide, methacrylamide, substituted acrylamides such as N,N-dimethyl acrylamide, itaconic acid, methacrylic acid, acrylonitrile, methacrylonitrile, vinyl acetate, N-vinyl pyrrolidone, isobornyl acrylate, cyano ethyl acrylate, N-vinylcaprolactam, maleic anhydride, hydroxyalkylacrylates, N,N-dimethyl aminoethyl (meth)acrylate, N,N-diethylacrylamide, beta-carboxyethyl acrylate, vinyl esters of neodecanoic, neononanoic, neopentanoic, 2-ethylhexanoic, or propionic acids such as those available from Union Carbide Corp. of Danbury, Conn. under the trade designation Vynates, vinylidene chloride, styrene, vinyl toluene, and alkyl vinyl ethers.

Optionally, the polymerizable adhesive composition may include about 0 to about 50 parts by weight of another class of co-monomers having a homopolymer glass transition temperature less than the glass transition temperature of the acrylate homopolymer. Non-limiting examples of suitable co-monomers falling within this class include ethoxyethoxy ethyl acrylate and methoxypolyethylene glycol 400 acrylate available from Shin Nakamura Chemical Co., Ltd. under the trade designation NK Ester AM-90G).

Depending upon the method of polymerization used to partially or fully polymerize the polymerizable adhesive composition, the polymerizable adhesive composition may include an initiator. For example, to partially or fully polymerize the polymerizable adhesive composition using ultraviolet light (UV), a photoinitiator may be included such as, for example, substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, benzoin isopropyl ether, substituted benzoin ethers such as anisoin methyl ether, aromatic sulfonyl chlorides, and photoactive oximes. The photoinitiator may be used in an amount from about 0.001 to about 5.0 parts by weight per 100 parts of total monomer in the polymerizable adhesive composition, preferably from about 0.01 to about 5.0 parts by weight per 100 parts of total monomer, and more preferably in an amount from 0.1 to 0.5 parts by weight per 100 parts of total monomer.

Preferably, the polymerizable adhesive composition also includes a chain transfer agent to control the molecular weight of the polymer. Chain transfer agents regulate free radical polymerization and may include, for example, halogenated hydrocarbons such as carbon tetrabromide; sulfur compounds such as lauryl mercaptan, butyl mercaptan, ethanethiol, isooctylthioglycolate (IOTG), 2-ethylhexyl thioglycolate, 2-ethylhexyl mercaptopropionate, 2-mercaptoimidazole, and 2-mercaptoethyl ether; and solvents such as ethanol, isopropanol, and ethyl acetate. The amount of chain transfer agent used in the polymerizable adhesive composition depends upon the desired molecular weight of the polymerizable adhesive composition and the type of chain transfer agent used. Solvents are useful as chain transfer agents, but they generally are not as active as, for example, the sulfur compounds. The chain transfer agent is typically used in amounts from about 0.001 part to about 10 parts by weight per 100 parts of total monomer in the polymerizable adhesive composition, and preferably from about 0.01 part to about 0.5 parts by weight, and most preferably from about 0.01 parts to about 0.20 parts by weight.

The polymerizable adhesive composition may further comprise an effective amount of a crosslinking agent. The crosslinking agent may be activated after the fibered bulk polymer has been coated on a substrate. Typically, the crosslinking agent is present at about 0.01 to about 5.0 parts by weight of the total monomer in the polymerizable adhesive composition. The cross-linking agent can be incorporated into the polymerizable adhesive composition prior to final polymerization, or may be added to the melted bulk polymer during the coating step. When added to the polymerizable adhesive composition, the cross-linking agent can remain intact as a separate species, or it can be co-polymerized with the monomers in the composition. Cross-linking is preferably initiated after hot melt coating, and the cross-linking is preferably initiated by ultraviolet (UV) radiation, ionizing radiation such as gamma radiation, or an electron beam (the use of separate cross-linking agents is optional in the case of ionizing radiation).

Preferred cross-linking agents that can be added after final polymerization of the polymerizable adhesive composition and before hot melt coating of the bulk polymer include multi-functional acrylates such as 1,6-hexanedioldiacrylate and trimethylolpropane triacrylate, and substituted triazines such as 2,4-bis(trichloromethyl)-6-(4-methoxyphenyl)-s-triazine and 2,4-bis(trichloromethyl)-6-(3,4-dimethoxyphenyl)-s-triazine, as described in U.S. Pat. Nos. 4,329,384 (Vesley et al.) and 4,330,590 (Vesley). Another class of preferred crosslinking agents are the copolymerizable mono-ethylenically unsaturated aromatic ketone comonomers free of ortho-aromatic hydroxyl groups such as those disclosed in U.S. Pat. No. 4,737,559 (Kellen et al.). Specific examples include para-acryloxybenzophenone, para-acryloxyethoxybenzophenone, para-N-(methylacryloxyethyl)-carbamoylethoxybenzophenone, para-acryloxyacetophenone, ortho-acrylamidoacetophenone, acrylated anthraquinones, and the like. Yet another suitable cross-linking agent is 1,5-bis(4-benzoylbenzoxy) pentane. Also suitable are hydrogen-abstracting carbonyls such as anthraquinone, benzophenone, and derivatives thereof, as disclosed in U.S. Pat. No. 4,181,752 (Martens et al.).

The monomers in the polymerizable adhesive composition can be cross-linked by exposure to ultraviolet (UV) radiation from, for example, medium pressure mercury arc lamps. It is preferred that cross-linking agents activated by ultraviolet radiation be primarily activated by a different wavelength of energy than that used for the polymerization of the polymerizable adhesive composition. For example, low intensity black lights may be used for polymerization and mercury arc lamps may be used for the subsequent cross-linking.

The polymerizable adhesive composition can further include tackifying resins to increase the tack of the bulk polymer. The tackifying resins can also be added as the bulk polymer is hot melt coated on a substrate. Suitable tackifying resins include rosin esters, terpenes, phenols, and aliphatic, aromatic, or mixtures of aliphatic and aromatic synthetic hydrocarbon pure monomer resins. Examples of useful tackifying resins that are commercially available include FORAL 85 and hydrocarbon resins sold under the trade designation REGALREZ by Hercules, Inc., ECR-180 from Exxon Chemicals and SP553 terpene phenolic resin available from Schenectady International, Inc. If used, the amount of tackifying resin can range from about 1 part to about 50 parts by weight per 100 parts of total monomer in the polymerizable adhesive composition.

Polymers may be dissolved in the polymerizable adhesive composition before polymerization to modify the adhesive characteristics of the bulk polymer, or to make a syrup or prepolymeric mixture with a suitable viscosity for introduction of the fibers. Examples of such polymeric modifiers include silicone pressure sensitive adhesives, acrylic polymers and copolymers, ethylene-vinyl acetate copolymers, acrylonitrile copolymers, and co-polymerizable macromers such as those described in U.S. Pat. No. 4,554,324 (Husman et al.). Pressure sensitive acrylate adhesive compositions described in U.S. Pat. No. 5,602,221 (Bennett et al.), incorporated herein by reference, may also be used in the process of the invention. In general, these adhesives are the polymerization product of 25-97 parts by weight of an acrylic acid ester of a monohydric alcohol whose homopolymer has a Tg less than 0°C, 3-75 parts by weight of a non-polar ethylenically unsaturated monomer whose homopolymer has a solubility parameter of no greater than 10.50 and a Tg of greater than 15°C, and 0-5 parts by weight of a polar ethylenically unsaturated monomer whose homopolymer has a solubility parameter of greater than 10.50 and a Tg of greater than 15°C. Also useful in the process of the invention are tackified pressure sensitive acrylate adhesive compositions described in U.S. Pat. No. 5, 756, 584 (Bennett et al.), incorporated herein by reference. In general, these adhesives comprise the polymerization product of 25-98 parts by weight of an acrylic acid ester of a monohydric alcohol whose homopolymer has a Tg less than 0°C, 2-75 parts by weight of a non-polar ethylenically unsaturated monomer whose homopolymer has a solubility parameter of no greater than 10.50 and a Tg of greater than 15°C, 0-5 parts by weight of a polar ethylenically unsaturated monomer whose homopolymer has a solubility parameter of greater than 10.50 and a Tg of greater than 15°C, and at least one tackifier that is miscible in the polymerization product at room temperature.

Other additives that can be included in the polymerizable composition or added at the time of hot melt coating of the bulk polymer to change the properties of the final fibered product Suitable additives and fillers include plasticizers, pigments, reinforcing agents, hydrophobic or hydrophilic silica, calcium carbonate, toughening agents, fire retardants, antioxidants, finely ground polymeric particles such as polyester, nylon, and polypropylene, and stabilizers. The additives are added in amounts sufficient to obtain the desired end properties.

The polymerizable composition preferably has a viscosity sufficient to allow rapid, even dispersion of the fibers into the composition using known shear mixing techniques such as propeller mixing such that it allows for rapid dispersion of fiber bundles. However, the polymerizable composition should be sufficiently viscous to prevent rapid settling of the fibers prior to final polymerization. To provide a suitable viscosity, the polymerizable composition may be partially polymerized by any known technique prior to fiber introduction. For example, the polymerizable composition may be partially polymerized by exposure to ultraviolet (UV) radiation as described in U.S. Pat. No. 4,181,752 (Martens et al.). Typically, the polymerizable monomers and the photoinitiator are mixed together in the absence of solvent and partially polymerized to a viscosity of about 500 cps to about 50,000 cps as measured by a Brookfield viscometer at 25°C, preferably about 1000 cps to about 2500 cps at 25°C, to achieve a prepolymerized coatable composition with a syrup-like consistency. Alternatively, the monomers may be mixed with a thixotropic agent such as fumed hydrophilic silica to achieve a desired viscosity for coating. The chain transfer agent, fibers, cross-linking agent and any other ingredients such as tackifier and antioxidant are then added to the prepolymerized syrup. Alternatively, with the exception of the cross-linking agent, these ingredients may be added directly to the monomers in the polymerizable adhesive composition.

As noted above, fibers are introduced into the polymerizable composition to form a coatable composition. Suitable fibers include organic and inorganic materials, although inorganic materials have been found to be particularly useful in the process of the invention. Organic materials include polymeric fibers such as, for example, polyester, nylon and polypropylene. An example of a suitable polyester fiber is Trevira type 103 from Hoechst-Celanese. Suitable inorganic materials include glass, metals, and ceramics. Fiber length and diameter can be varied over a wide range depending on the intended application of the final fibered adhesive composition.

Preferred inorganic fibers are glass fibers, available as 731A-16W-0.25" from Owens-Coming. The fibers can be selected such that the specific gravity of the fibers is similar to the specific gravity of the polymerizable composition so that there is a greater tendency for the fibers to remain suspended/dispersed in the polymerizable composition prior to the final polymerization step.

Preferred glass fibers have a length, measured at the time of introduction into the polymerizable adhesive composition, of about 50 mils (1.3 mm) to about 500 mils (13 mm). The fiber diameter is about 1 micron (0.025 mm) to about 50 micron (1.3 mm), more preferably about 5 micron (0.13 mm) to about 20 micron (0.52 mm), and most preferably about 7 micron (0.18 mm) to about 16 micron (0.41 mm).

The amount of fiber used in the coatable composition is typically from about 0.25 to about 5 parts by weight per 100 parts based on the total weight of the composition. When the amount of fiber used in the coatable composition is greater than about 5 parts by weight, it is more difficult to incorporate into the prepolymerized syrup and/or to thinly coat the coatable composition. When the amount of fiber used in the coatable composition is less than about 0.25 parts by weight, tapes with the resulting fibered adhesive layer may not be suitably dispensable for many applications.

The fibers may be introduced and dispersed in the polymerizable composition prior to final polymerization by any known technique such as, for example, propeller mixing. When the fibers are organic, low temperature, operations prevent the coatable composition from reaching high temperatures that may melt, elongate or otherwise distort the fibers. Preferably, the fibers are distributed in the coatable composition, which provides a final adhesive layer which, when used in a transfer tape, has more reliable and predictable dispensability properties. The uniform dispersion of fibers prior to final polymerization also prevents large numbers of fibers from protruding from the surface of the final product, which creates a final product with a more smooth and uniform surface than may be achieved using solvent based processes.

The fibers may optionally be introduced in a binder to hold the fiber bundles together to enhance dispersion in the polymerizable adhesive composition. If a fiber binder is used, it should preferably be soluble in the monomers used in the polymerizable adhesive composition.

After the fibers are substantially uniformly dispersed in the polymerizable composition to form the coatable composition, the coatable composition may be coated onto a substrate and finally polymerized to form a fibered bulk polymer. Preferably, to form the fibered bulk polymer, the coatable composition is at least about 95% polymerized, more preferably at least about 98% polymerized. Polymerization may be achieved using any known polymerization process, and exposure to ultraviolet (UV) radiation has been found to be suitable. To facilitate the UV polymerization process, the substrate on which the coatable composition is coated is substantially transparent to ultraviolet wavelengths. The final polymerization of the coatable composition is also preferably conducted in an inert (i.e., oxygen free) atmosphere, e.g., a nitrogen atmosphere. Examples of suitable substrates for the final polymerization of the coatable composition include release liners (e.g., silicone release liners) and tape backings and the like. A sufficiently inert atmosphere can be also achieved by covering a coated layer of the coatable composition with a plastic film which is substantially transparent to ultraviolet radiation, and irradiating through the cover film in air as described in the aforementioned Martens et al. patent using ultraviolet lamps. In a preferred embodiment, the final polymerization of the coatable composition is carried out with UV black lights having over 60%, and preferably over 75%, of their emission spectra between 280 to 400 nanometers (nm), with an intensity between about 0.1 to about 25 mW/cm².

Typical coating thickness is about 25 mils to about 200 mils, preferably 25 mils to 125 mils, most preferably 75 to 125 mils.

The refractive index of the coatable composition may be monitored to determine the extent of polymerization. Refractive index is a sensitive measure of the extent of polymerization. For example, the refractive index of a coatable composition including acrylic monomers changes from about 1.4300 at the polymerizable composition stage to about 1.4700 when the coatable composition is 100% polymerized into a fibered bulk adhesive. The change in refractive index occurs linearly with conversion of acrylate unsaturation. This method is commonly applied in polymerization kinetics work as discussed in Gladyshev and Gibov, *Polymerization at Advanced Degrees of Conversion*, Keter Press, Jerusalem, 1970.

After final polymerization, the polymerized bulk polymer is introduced into a vessel and melted. The melting step may be conducted in any known manner such as, for example, in a heated single screw or twin screw extruder, a bulk tank melter, in melt-on-demand equipment or in a hand-held hot melt adhesive gun. The single screw or twin screw extruder are preferred. In a preferred embodiment, the melted bulk polymer is a hot meltable pressure sensitive adhesive, and the melted adhesive may be used to form a pressure sensitive adhesive sheet by coating a layer of the melted adhesive onto a sheet material or another suitable substrate. The sheet material is preferably selected from a tape backing or a release liner. Preferably, the bulk polymer is melt coated by placing the polymer in a coater at a temperature sufficient to melt the polymer and with sufficient mixing to form a coatable bulk polymer mixture, which is coated onto a substrate. If a cross-linking agent is added, the coated adhesive can also be exposed to sufficient UV radiation or ionizing radiation to effect the cross-linking. Cross-linking is preferably initiated after coating the bulk polymer on the substrate material.

During the melting and coating step, the inorganic fibers are preferably ground, broken and dispersed in the bulk polymer. This processing creates an adhesive layer in the final product that is reinforced with fibers having a broad distribution of fiber lengths. The fibers in the coated adhesive layer preferably, have a mean fiber length of about 10 mils (0.25 mm) to about 60 mils (1.50 mm), and a range of fiber lengths from about 1 mil (0.025 mm) to about 100 mils (2.50 mm). While not wishing to be bound by any theory, it is believed that this dispersion of fibers in the adhesive layer, and the wide distribution of fiber lengths produce an adhesive layer with a large number of nucleation sites that facilitate fracture. Even if the adhesive in the adhesive layer is aggressively tacky and has high cohesive strength, the adhesive layer is readily fracturable at the nucleation sites, which both enhances dispensability and provides more uniform dispensability in tape applications. A preferred dispensable tape construction may be cleanly broken with a sharp edge and little snap back, preferably substantially no snap back, in an SCOTCH ATG 700 tape dispenser available from 3M Company, St Paul. MN.

The steps of the inventive process may be performed in-line, i.e., the polymerizable composition may be made, combined with optional chain transfer agent, optional crosslinking agent, and fibers to form the coatable composition, polymerized to form the fibered bulk polymer, hot melt coated to form a layer of the final product, and optionally cross-linked, or the steps may be performed individually at separate times and sites.

In a preferred embodiment of the invention, the final coated polymer product is a high performance pressure sensitive adhesive layer. This adhesive layer may be coated on any suitable substrate, and, if the substrate is a release liner, the resulting construction is a high performance transfer tape with excellent dispensability. Transfer tape is removed from the liner when used by the end user. Typical thicknesses are 0.5 mils to 10 mils, more preferably 2 to 5 mils.

In another embodiment of the invention, this high performance pressure sensitive adhesive layer may be coated on one or both sides of a tape backing to produce a single or double coated tape construction. Typical tape backings include cellulosic materials such as paper, crepe paper, and cloth (including both woven and non-woven cloths); films such as biaxially oriented polyester, polyvinyl chloride, polyurethane, biaxially and monoaxially oriented polypropylene, nylon; foam materials such as polyethylene foams and acrylic foams; and metal foils such as aluminum foil. The backings are usually treated on a backside (side opposite the coated layer) with a release coating such as silicone, and may be treated prior to hot melt coating to enhance the adhesion of the adhesive layer to the backing. Treatments useful for enhancing the adhesion of the adhesive to the backing include chemical priming and corona treatment.

In yet another embodiment, the substrate may be a surface of a part to be bonded to another part with the adhesive layer. In another embodiment of the invention, the adhesive layer or a tape made out of the adhesive layer may be used to damp vibrations or as a sealant.

In addition to the above-described applications, the packaged adhesives are useful in other areas. For example, the above-described method can be used to prepare self-stick articles useful, e.g., as labels, stickers, body-side moldings, decorative moldings, electrical tapes, drug-delivery patches, mechanical fasteners (e.g., SCOTCHMATE brand hook and loop fasteners and DUAL LOCK brand reclosable fasteners available from 3M Co. of St. Paul, Minn.), abrasive articles (e.g., grinding disks), form-in-place gaskets, medical tapes, canvas marking films, and decorative sheeting, and by disposing the pre-adhesive composition between a substrate sheet and a releasable liner, polymerizing the composition, and then removing the liner.

The adhesives can also be used on sheet products such as retroreflective sheetings (e.g., microsphere-based retroreflective sheetings and cube corner type sheetings) and graphic sheetings. Illustrative examples of retroreflective sheetings on which adhesives of the invention can be used include exposed-lens retroreflective sheetings, embedded-lens sheetings, and encapsulated-lens sheetings. Illustrative examples of commercially available retroreflective sheetings suitable for use include the SCOTCHLITE Brand Engineer Grade, High Intensity Grade, and Diamond Grade Retroreflective Sheetings sold by 3M of St. Paul, Minn. Upon selection of suitable embodiments of the adhesive, these sheetings can be applied to a variety of desired substrates such as license plate blanks, vehicle bodies, sign faces, guard rails, pavement surfaces, vehicle bodies, traffic cones, barriers, clothing, and markers, etc. Illustrative examples of commercially available graphic sheetings suitable for use include SCOTCHCAL Brand Vinyl Films and Polyester Films from 3M of St. Paul, Minn.

The invention will now be further described by way of the following examples. All parts or percents are by weight unless specified otherwise.

### EXAMPLES

### Test Procedures

Test procedures used in the examples to evaluate the adhesives include the following:

### 1. 90° Peel Adhesion

When two liners are present, one of the liners is removed from a strip of pressure sensitive adhesive transfer tape measuring 5 inches by 0.5 inches, and laminated to a 2 mil thick aluminum foil. The other liner is then removed and the tape is adhered to a 2 inch by 5 inches stainless steel panel that had been wiped clean once with acetone and wiped twice with heptane, 2 inch by 5 inches acrylonitrile butadiene styrene panel, and/or a 2 inch by 5 inches polypropylene panel. The tape is rolled down with one pass of a 4.5 1b hard rubber roller. The panel is conditioned at room temperature (about 72 °F) for about 15 minutes then mounted on a peel tester such that the tape is pulled off at a 90° angle at a speed of 12 inches per minute. The results are reported in the tables in ounces per inch (oz/in), and the values are an average of two tests.

### 2. Static Shear

Static shear is determined by laminating the pressure sensitive ½ inches by 5 inches for Examples 1-23, and adhesive transfer tape to a 2 mil thick piece of aluminum foil and cutting to a dimension of 1 inch by 5 inches for Examples 24-36. One end of the sample is adhered to a stainless steel panel, previously cleaned as described above, with a one inch overlap, and a weight is attached to the other end of the sample. The panel is then hung at about a 2° tilt from the vertical, to assure a shear mode failure, and the time in which the sample pulls away from the panel is measured in minutes (min). The test is discontinued after 10,000 minutes. A 500 gram weight is used for the room temperature shear (RT). The reported values represent the average value of two tests per set.

### 3. Dispensability

Dispensability was determined by dispensing an approximate 6 inch long by 0.5 inch wide strip of fiber containing tape from a SCOTCH ATG 700 tape dispenser, commercially available from 3M Company, St. Paul, MN onto a 81/2 inch by 11 inch tablet of paper in one single motion. After dispensing 6 inches of tape length, the dispenser is lifted off the paper at a 30 angle with a quick motion away from applied tape to sever tape. The dispensability was determined visually and rated as:
Excellent - sharp edge, clean break of tape without snap back.
Good - clean break of tape with some snap back.
Poor (No) - difficult to break tape, break not clean, excessive snap back.

### Examples 1-11

Eleven adhesive compositions were prepared and evaluated to demonstrate the effect of varying fiber content and tape thickness on tape properties.

The examples were prepared as follows:
100 parts by weight of isooctyl acrylate (IOA) and acrylic acid (AA), in the monomer ratio given in Table 1 below, were blended with 0.10 wt. % acryloxybenzophenone (ABP) crosslinker, added as a 75/25 parts by weight IOA/ABP solution, 0.05 wt. % chain transfer agent (carbon tetrabromide (CBr₄)),
and 1.0 wt. % antioxidant (octadecyl-3-(3,5-di-*tert*-butyl-4-hydroxyphenyl)propionate, commercially available from Ciba-Geigy, Ardsley, NY, under the trade designation IRGANOX 1076).

The resulting reduced molecular weight, high conversion syrup had a polymer molecular weight of approx. 700,000 to 1 million. Final syrup conversion was about 20 % with about 3500 cps viscosity.

Glass fibers (16 microns diameter by 0.25 inch (0.64 cm)) long, available under the trade designation 731A-16W-0.25" from Owens-Corning, South Carolina) were added in the amounts listed in Table 1 to the above syrup and mixed until the fiber bundles uniformly dispersed.

Final polymerization producing a bulk, fiber containing, hot melt acrylic adhesive was carried out by coating the fiber containing syrup at a thickness of 125 mils onto a 2 mil thick polyester film, covering the layer of the polymerizable coating with a second 2 mil polyester film which is substantially transparent to ultraviolet radiation, and irradiating through that film in air as described in the aforementioned Martens et al. patent using low intensity, fluorescent ultraviolet lamps. The total ultraviolet (UV) energy was 1600 mJ/cm² (NIST) with split light intensity of the first 25% of the UV energy at 0.9 milliwatts (MW) with the remaining 75% at 2.5 MW. This gave a bulk polymer with less than about 0.5 weight % residual IOA monomer as determined by gas chromatography.

The bulk polymer was then extruded at 350 °F from an extruder fitted with a rotary rod die at a thickness of 2 mils (0.05 mm) for Examples 1-4, 5 mils (0.12 mm) for Examples 5-8, and 10 mils (0.25 mm) for Examples 9-11. The extruded composition was then crosslinked with 400 mJ/cm² (NIST) of high intensity UV energy using a mercury arc lamp.

The tape samples were tested for shear adhesion, 90° peel adhesion on stainless steel, and dispensability using the test methods outlined above. Results are given in Table 1.

**Table 1**

| **Ex. No.** | **IOA/AA Ratio** | **Wt. % Glass Fiber** | **Wt. % CBr**_{**4**} | **Shear Adhesion, minutes** | **90° Peel Adhesion, oz/in** | **Dispensability** |
|---|---|---|---|---|---|---|
| **2 mils** | | | | | | |
| 1 | 94/6 | 0.50 | 0.05 | 10,000+ | 35 | excellent |
| 2 | 94/6 | 1.0 | 0.05 | 10,000+ | 30 | excellent |
| 3 | 94/6 | 2.0 | 0.05 | 10,000+ | 32 | excellent |
| 4 | 94/6 | 3.0 | 0.05 | 10,000+ | 31 | excellent |
| **5 mils** | | | | | | |
| 5 | 94/6 | 1.0 | 0.05 | 5539 | 39 | excellent |
| 6 | 94/6 | 2.0 | 0.05 | 10,000+ | 39 | excellent |
| 7 | 94/6 | 3.0 | 0.05 | 10,000+ | 49 | excellent |
| 8 | 90/10 | 0.50 | 0.05 | 10,000+ | 57 | good |
| **10 mils** | | | | | | |
| 9 | 94/6 | 1.0 | 0.05 | 2061 | 58 | poor |
| 10 | 94/6 | 2.0 | 0.05 | 2552 | 61 | poor |
| 11 | 94/6 | 3.0 | 0.05 | 10,000+ | 57 | poor |

From the data it can be seen that various levels of glass fibers, acrylic acid concentration, and coating weights exhibited superior shear and adhesion values when compared to the solvent based control. Dispensability with 2 mils and 5 mils coatings was excellent. Thicker 10 mil samples had film strength too high.

### Examples 12-14

Three adhesive compositions were prepared and evaluated to demonstrate the effect of varying acrylic acid content on tape properties.

The examples were prepared as in Examples 1-11, using the components of Table 2. The bulk polymer was extruded at 350 °F from an extruded fitted with a rotary rod die at a thickness of 2 mils.

The components and amounts used given in Table 2 below. The tape samples were tested for shear adhesion, 90° peel adhesion on stainless steel (SS), acrylonitrile butadiene styrene (ABS) and polypropylene (PP), and dispensability using the test methods outlined above. Results are given in Table 2.

**Table 2**

| **Ex. No.** | **IOA/ AA Ratio** | **Wt. % Glass Fiber** | **Wt. % CBr4** | **Shear Adhesion,** minutes | **90° Peel Adhesion, oz/in** | | | **Dispensability** |
|---|---|---|---|---|---|---|---|---|
| | | | | | **SS** | **ABS** | **PP** | |
| 12 | 96/4 | 0.50 | 0.05 | 6521 | 30 | 29 | 21 | excellent |
| 13 | 94/6 | 1.0 | 0.05 | 10,000+ | 36 | 37 | 18 | excellent |
| 14 | 90/10 | 2.0 | 0.05 | 10,000+ | 34 | 34 | 14 | excellent |

From the data it can be seen that excellent dispensability can be achieved with and wide range of increased acrylic acid concentrations.

### Examples 15-17

Three adhesive compositions were prepared and evaluated to demonstrate the effect of a tackifier available under the trade designation FORAL 85 from Hercules, Wilmington, DE, on tape properties for cross-linked and uncross-linked tapes.

The examples were prepared as in Examples 1-11, using the components of Table 3, except that Examples 15 and 16 were not irradiated after extrusion, and Example 17 was irradiated after extrusion with a total ultraviolet (UV) energy of 900 mJ/cm² (NIST) of high intensity UV energy as supplied by a mercury arc lamp. The tackifier was added to the melt extruder along with the bulk polymer and the mixture was extruded at 350°F from an extruded fitted with a rotary rod die at a thickness of 5 mils.

The components and amounts used given in Table 3 below. The tape samples were tested for shear adhesion, 90° peel adhesion on stainless steel (SS), and dispensability using the test methods outlined above. Results are given in Table 3.

**Table 3**

| **Ex. No.** | **IOA/ AA Ratio** | **Wt. % Glass Fiber** | **Wt. % CBr4** | **Wt. % Foral** 85 | **Shear Adhesion, minutes** | **90° Peel Adhesion, oz/in** | | | **Dispensability** |
|---|---|---|---|---|---|---|---|---|---|
| | | | | | | **SS** | **ABS** | **PP** | |
| 15 | 96/4 | 0.50 | 0.05 | 0 | 189 | 50 | 51 | 40 | Excellent |
| 16 | 94/6 | 0.5 | 0.05 | 20 | 238 | 71 | 61 | 40 | Excellent |
| 17 | 94/6 | 0.5 | 0.05 | 20 | 10,000+ | 53 | 51 | 42 | Excellent |

From the data, it can be seen that adhesion values increased with the use of tackifying resins. Increasing the level of Foral-85 with light cross-linking yielded adhesion values similar to solvent-based products. Uncrosslinked examples exhibited reduced shear values due to reduced molecular weight required for hot melt coatability.

### Examples 18-23

Three adhesive compositions were prepared and evaluated to demonstrate the effect of varying mean fiber length and coating process on tape properties.

The examples were prepared according to the procedure of Examples 1-11, using 95/5 parts by weight IOA/AA, 0.05 wt.% CBr₄, and 0.1 wt % ABP. The glass fibers of Examples 1-11 were used in the amounts shown in Table 4. A total ultraviolet (UV) energy of 400 mJ/cm² (NIST) of high intensity UV energy was applied using a mercury arc lamp to crosslink the composition after extrusion coating.

For Examples 18 and 19, the bulk polymer was pumped through an adhesive pump to the rotary rod die. For Examples 20 and 21, the bulk polymer was pumped through an adhesive pump, followed by a single screw extruder operating at 45 and 96 RPM respectively, and then to the rotary rod die. For Examples 22 and 23, the bulk polymer was pumped through an adhesive pump, followed by a twin-screw extruder operating at 100 and 300 RPM respectively, and then to the rotary rod die. All Examples were processed at 350 °F and extruded from the die at a thickness of 2 mils.

The coating process used, the amount of glass fiber used, the mean fiber length and standard deviation given in Table 4 below. The tape samples were tested for dispensability using the test method outlined above. Results are given in Table 4.

**Table 4**

| **Ex. No.** | **Coating Process** | **Wt. % Glass Fiber** | **Mean Fiber Length (mils)** | **Fiber Length Std. Deviation (mils)** | **Dispensability** |
|---|---|---|---|---|---|
| C-1 | SOLVENT (CONTROL) | | 250 | ----- | excellent |
| 18 | P/DIE | 1.0 | 44.4 | 9.68 | excellent |
| 19 | P/DIE | 0.50 | 32.0 | 14.97 | excellent |
| 20 | P/SS/DIE (45RPM*) | 1.0 | 41.7 | 16.73 | excellent |
| 21 | P/SS/DIE (96 RPM*) | 1.0 | 36.8 | 15.69 | excellent |
| 22 | P/TS/DIE (100 RPM*) | 1.0 | 21.01 | 11.95 | excellent |
| 23 | P/TS/DIE (300 RPM*) | 1.0 | 12.18 | 6.75 | excellent |

| | | | | | |
|---|---|---|---|---|---|
| *Screw speed in RPM | | | | | |
| P = adhesive pump | | | | | |
| SS = single screw extruder | | | | | |
| TS = twin screw extruder | | | | | |
| DIE = rotary rod die | | | | | |

The table above shows the effect of fiber length as a result of different types of processing conditions as compared to the solvent-based control. The control does not exhibit fiber breakage, but other types of processing such as single or double screw extruders show quite extensive fiber breakage. This fiber breakage provides an adhesive layer with excellent dispensability in all examples.

### Examples 24-28

Five adhesive compositions were prepared and evaluated to determine the performance of acid free, non-polar adhesives made by the process of the invention.

The examples were prepared as follows:
100 parts by weight of ethyl hexyl acrylate (EHA) and isobornyl acrylate (IBOA), in the monomer ratio given in Table 5 below, were blended with 0.10 wt. % acryloxybenzophenone (ABP) crosslinker, added as a 75/25 parts by weight IOA/ABP solution, 0.05 wt. % chain transfer agent (carbon tetrabromide (CBr₄)), and 1.0 wt. % IRGANOX 1076.

The resultant reduced molecular weight, high conversion syrup had a polymer molecular weight of approx. 700,000 to 1.0 million. Final syrup conversion was about 20 % with about 3500 cps viscosity.

1.5 wt. % glass fibers (16 micron diameter by 0.25 inch long, available under the trade designation 731A-16W-025" from Owens-Corning, Toledo, Ohio) were added to the above syrup until the fiber bundles uniformly dispersed.

Final polymerization producing a bulk, fiber containing, hot melt acrylic adhesive was carried out by coating the fiber containing syrup at a thickness of 125 mils onto a 2 mil thick polyester film, covering the layer of the polymerizable coating with a second 2 mil polyester film which is substantially transparent to ultraviolet radiation, and irradiating through that film in air as described in the aforementioned Martens et al. patent using ultraviolet lamps. The total ultraviolet (UV) energy was 1600 mJ/cm² (NIST) with split light intensity of the first 25% of the UV energy at 0.9 milliwatts (MW) with the remaining 75% at 2.5 MW. This gave a bulk polymer with less than 0.5 weight % residual IOA monomer as determined by gas chromatography.

The bulk polymer was then extruded at 350 °F from an extruded fitted with a rotary rod die at a thickness of 2 mils and crosslinked with 250 mJ/cm² (NIST) of high intensity UV energy applied using a mercury arc lamp.

The components and amounts used given in Table 5 below. The tape samples were tested for shear adhesion using a one inch overlap area, 90° peel adhesion on various substrates, and dispensability using the test methods outlined above. Results are given in Table 5.

**Table 5**

| **Ex. No.** | **EHA/ IBOA Ratio** | **Shear Adhesion, minutes** | **90 °Peel Adhesion, oz/in** | | | **Dispensability** |
|---|---|---|---|---|---|---|
| | | | **SS** | **ABS** | **PP** | |
| 24 | 85/15 | 10,000+ | 27 | 26 | 28 | excellent |
| 25 | 80/20 | 10,000+ | 28 | 26+ | 25 | excellent |
| 26 | 75/25 | 10,000+ | 32 | 33 | 25 | excellent |
| 27 | 70/30 | 10,000+ | 38 | 36 | 28 | excellent |
| 28 | 65/35 | 10,000+ | 49 | 42 | 28 | excellent |

### Examples 29-30

Two adhesive compositions were prepared and evaluated to determine the performance of tackified acid free, non-polar adhesives made by the process of the invention.

The examples were prepared as in Examples 24-28 except that 0.04 wt. % CBr₄ was used in stead of 0.05 wt. %, 2.0 wt. % glass fibers were used instead of 1.5 wt.%, and 20 wt. % of tackifier available under the trade designation REGALREZ 6108 from Hercules, Inc., Wilmington, DE) was added along with the bulk polymer at the extruder. 1.5 wt. % of a stabilizer available from Ciba Geigy under the trade designation TINUVIN 770 was also added.

For Example 29, the total ultraviolet (UV) energy was 300 mJ/cm² (NIST) and for Example 30, the total ultraviolet energy was 500 mJ/cm² of high intensity from a mercury arc lamp after extrucsion from hot melt extruder.

The bulk polymer was then extruded at 350° F from an extruded fitted with a rotary rod die at a thickness of 2 mils.

The components and amounts used given in Table 6 below. The tape samples were tested for shear adhesion using an overlap area of one inch, 90° peel adhesion on various substrates, and dispensability using the test methods outlined above. Results are given in Table 6.

**Table 6**

| **Ex. No.** | **EHA/ IBOA Ratio** | **Shear Adhesion, minutes** | **90° Peel Adhesion, oz/in** | | | **Dispensability** |
|---|---|---|---|---|---|---|
| | | | **SS** | **ABS** | **PP** | |
| 29 | 80/20 | 3529 | 41 | 38 | 22 | excellent |
| 30 | 80/20 | 4633 | 42 | 40 | 19 | excellent |

### Examples 31-36

Six adhesive compositions were prepared and evaluated to demonstrate the effect of varying fiber type and content on tape properties.

The examples were prepared as follows:
100 parts by weight of isooctyl acrylate (IOA) and acrylic acid (AA), in the monomer ratio 94/6 by weight respectively, were blended with 0.10 wt. % acryloxybenzophenone (ABP) cross linker, added as a 75/25 parts by weight IOA/ABP solution, 0.05 wt. % chain transfer agent (CBr₄)), and 1.0 wt. %. IRGANOX 1076.

The resultant reduced molecular weight, high conversion syrup had a polymer molecular weight of approx. 700,000 to 1.0 million. Final syrup conversion was about 20 % with about 3500 cps viscosity.

Various types of fibers in the amounts listed in Table 7 were added to the above syrup until the fiber bundles uniformly dispersed.

Final polymerization producing a bulk, fiber containing, hot melt acrylic adhesive was carried out by coating the fiber containing syrup at a thickness of 125 mils onto a 2 mil thick polyester film, covering the layer of the polymerizable coating with a second 2 mil polyester film which is substantially transparent to ultraviolet radiation, and irradiating through that film in air using ultraviolet lamps. The total ultraviolet (UV) energy was 1600 mJ/cm² (NIST) with split light intensity of the first 25% of the UV energy at 0.9 milliwatts (MW) with the remaining 75% at 2.5 MW using low intensity, fluorescent lamps. This gave a bulk polymer with less than 0.5 weight % residual IOA monomer as determined by gas chromatography.

The bulk polymer was then extruded at 350° F from an extruder fitted with a rotary rod die at a thickness of 2 mils and crosslinked with 400 mJ/cm² (NIST) of high intensity UV energy applied using a mercury arc lamp.

The components and amounts used given in Table 7 below. The tape samples were tested for shear adhesion using a one inch overlap area, 90 degree peel adhesion on stainless steel , and dispensability using the test methods outlined above. Results are given in Table 7.

**Table 7**

| **Ex. No.** | **Fiber Type** | **Wt. % Fiber** | **Shear Adhesion, minutes** | **90° Peel Adhesion, oz/in** | **Dispensability** |
|---|---|---|---|---|---|
| 31 | Glass(1) | 1.0 | 10,000+ | 32 | excellent |
| 32 | Glass | 3.0 | 10,000+ | 31 | excellent |
| 33 | PET(2) | 1.0 | 10,000+ | 33 | excellent |
| 34 | PET | 3.0 | 10,000+ | 26 | excellent |
| 35 | PVA(3) | 1.0 | 10,000+ | 32 | excellent |
| 36 | PVA | 3.0 | 10,000+ | 27 | excellent |

| | | | | | |
|---|---|---|---|---|---|
| (1) 0.25 inch length, 7.5 micron diameter glass fibers, available from Owens Coming as #691. | | | | | |
| (2) polyethylene terepthalate fibers, 1.5 denier, 0.25 inch long, available from Hoechst-Celanese Corp. | | | | | |
| (3) polyvinyl alcohol fibers, 1.8 denier, 0.25 inch long, available from Kuraray, Japan. | | | | | |

The tape samples exhibited good dispensability with broad range of fiber types.

## Claims

1. A process for making a fibered composition, comprising:
(a) providing a coatable composition comprising a polymerizable adhesive composition and inorganic fibers;
(b) polymerizing the coatable composition to produce a fibered bulk polymer; and
(c) hot melt coating the fibered bulk polymer onto a substrate to form a fibered adhesive layer.

2. The process of claim 1, wherein the fiber in the adhesive layer have a mean fiber length of about 10 mils (0.25 mm) to about 60 mils (1.50 mm), and a range of fiber lengths from about 1 mil (0.025 mm) to about 100 mils (2.50 mm).

3. The process of claim 1, wherein the polymerizable adhesive composition comprises less than about 1% by weight solvent..

4. The process of claim 1, wherein the inorganic fibers are selected from the group consisting of glass fibers, ceramic fibers and combinations thereof.

5. The process of claim 1, wherein the inorganic fibers are glass fibers.

6. The process of claim 2, wherein the inorganic fibers are glass fibers.

7. The process of claim 1, wherein the step (a) further comprises coating the coatable composition on a second substrate.

8. The process of claim 7, wherein the second substrate is a release liner.

9. The process of claim 1, wherein the polymerizable composition has a molecular weight of less than about 1.5 million.

10. The process of claim 1, wherein step (d) further comprises crosslinking the fibered adhesive layer by exposure to energy selected from UV, e-beam, gamma rays and thermal.

11. The process of claim 10, wherein the energy is UV.

12. The process of claim 1, wherein step (c) comprises extruding the fibered bulk polymer onto the substrate.

13. The process of claim 1, wherein the adhesive composition is a pressure sensitive adhesive composition.

14. The process of claim 1, wherein the first substrate is a release liner.

15. A process for making a fibered adhesive, comprising:
(a) introducing glass fibers into a polymerizable adhesive composition to form a coatable adhesive composition;
(b) coating the coatable adhesive composition onto a first substrate;
(c) polymerizing the coatable adhesive composition to produce a fibered bulk polymer on the first substrate; and
(d) removing the fibered bulk polymer from the first substrate and extruding the fibered bulk polymer onto a second substrate to form a fibered adhesive layer thereon.

16. The process of claim 15, wherein the fibers in the adhesive layer have a mean fiber length of about 10 mils (0.25 mm) to about 60 mils (1.50 mm), and a range of fiber lengths from about 1 mil (0.025 mm) to about 100 mils (2.50 mm).

17. The process of claim 15, wherein the polymerizable adhesive composition comprises less than about 1% by weight solvent.

18. The process of claim 1, wherein the step (a) further comprises coating the coatable composition on a second substrate.

19. The process of claim 15, wherein the fibered bulk polymer is UV polymerized in step (c).

20. The process of claim 15, wherein the fibered bulk polymer on the first substrate has a thickness of at least about 25 mils.

21. The process of claim 15, wherein the fibered bulk polymer has a molecular weight of about 800,000 to about 1 million.

22. The process of claim 15, wherein the polymerizable adhesive composition comprises acrylic monomers.

23. A fibered adhesive transfer tape comprising an adhesive layer with glass fibers, wherein the glass fibers have a mean fiber length of about 10 mils (0.25 mm) to about 60 mils (1.50 mm), and a range of fiber lengths from about 1 mil (0.025 mm) to about 100 mils (2.50 mm), and wherein the transfer tape is dispensable.

24. A fibered adhesive transfer tape with a fibered adhesive layer made by the process of:
(a) introducing glass fibers into a polymerizable acrylic adhesive composition to form a coatable adhesive composition;
(b) coating the coatable adhesive composition onto a first substrate;
(c) polymerizing the coatable adhesive composition to produce a fibered bulk polymer on the first substrate; and
(d) removing the fibered bulk polymer from the first substrate and extruding the fibered bulk polymer onto a second substrate to form a fibered adhesive layer thereon, wherein the fibers in the adhesive layer have a median fiber length of about 10 mils (0.25 mm) to about 60 mils (1.50 mm), and a range of fiber lengths from about 1 mil (0.025 mm) to about 100 mils (2.50 mm).

25. The transfer tape of claim 24, wherein the tape is dispensable.

## Patentansprüche

1. Verfahren zum Herstellen einer mit Fasern versehenen Zusammensetzung, umfassend:
(a) Bereitstellen einer auftragbaren Zusammensetzung, umfassend eine polymerisierbare Klebstoffzusammensetzung und anorganische Fasern,
(b) Polymerisieren der auftragbaren Zusammensetzung, um ein mit Fasern versehenes Massepolymer herzustellen, und
(c) Auftragen des mit Fasern versehenen Massepolymers im Schmelzezustand auf ein Substrat, um eine mit Fasern versehene Klebstoffschicht zu bilden.

2. Verfahren nach Anspruch 1, wobei die Fasern in der Klebstoffschicht eine mittlere Faserlänge von etwa 10 mils (0,25 mm) bis etwa 60 mils (1,50 mm) und einen Faserlängenbereich von etwa 1 mils (0,025 mm) bis etwa 100 mils (2,50 mm) aufweisen.

3. Verfahren nach Anspruch 1, wobei die polymerisierbare Klebstoffzusammensetzung weniger als etwa 1 Gew.% Lösemittel aufweist.

4. Verfahren nach Anspruch 1, wobei die anorganischen Fasern aus der Gruppe ausgewählt sind, die aus Glasfasern, Keramikfasern und Kombinationen davon besteht.

5. Verfahren nach Anspruch 1, wobei die anorganischen Fasern Glasfasern sind.

6. Verfahren nach Anspruch 2, wobei die anorganischen Fasern Glasfasern sind.

7. Verfahren nach Anspruch 1, wobei der Schritt (a) ferner das Auftragen der auftragbaren Zusammensetzung auf ein zweites Substrat umfasst.

8. Verfahren nach Anspruch 7, wobei das zweite Substrat eine Abdeckfolie ist.

9. Verfahren nach Anspruch 1, wobei die polymerisierbare Zusammensetzung ein Molekulargewicht von weniger als etwa 1,5 Millionen aufweist.

10. Verfahren nach Anspruch 1, wobei Schritt (d) ferner das Vernetzen der mit Fasern versehenen Klebstoffschicht durch Einwirken von Energie, ausgewählt aus UV-, Elektronenstrahl-, Gammastrahlen- und Wärmeenergie, umfasst.

11. Verfahren nach Anspruch 10, wobei die Energie UV-Energie ist.

12. Verfahren nach Anspruch 1, wobei Schritt (c) das Extrudieren des mit Fasern versehenen Massepolymers auf das Substrat umfasst.

13. Verfahren nach Anspruch 1, wobei die Klebstoffzusammensetzung eine Haftklebstoffzusammensetzung ist.

14. Verfahren nach Anspruch 1, wobei das erste Substrat eine Abdeckfolie ist.

15. Verfahren zum Herstellen eines mit Fasern versehenen Klebstoffs, umfassend:
(a) Einbringen von Glasfasern in eine polymerisierbare Klebstoffzusammensetzung, um eine auftragbare Klebstoffzusammensetzung zu bilden,
(b) Auftragen der auftragbaren Klebstoffzusammensetzung auf ein erstes Substrat,
(c) Polymerisieren der auftragbaren Klebstoffzusammensetzung, um auf dem ersten Substrat ein mit Fasern versehenes Massepolymer zu erzeugen, und
(d) Entfernen des mit Fasern versehenen Massepolymers von dem ersten Substrat und Extrudieren des mit Fasern versehenen Massepolymers auf ein zweites Substrat, um darauf eine mit Fasern versehene Klebstoffschicht zu bilden.

16. Verfahren nach Anspruch 15, wobei die Fasern in der Klebstoffschicht eine mittlere Faserlänge von etwa 10 mils (0,25 mm) bis etwa 60 mils (1,50 mm) und einen Faserlängenbereich von etwa 1 mils (0,025 mm) bis etwa 100 mils (2,50 mm) aufweisen.

17. Verfahren nach Anspruch 15, wobei die polymerisierbare Klebstoffzusammensetzung weniger als etwa 1 Gew.% Lösemittel umfasst.

18. Verfahren nach Anspruch 1, wobei der Schritt (a) ferner das Auftragen der auftragbaren Zusammensetzung auf ein zweites Substrat umfasst.

19. Verfahren nach Anspruch 15, wobei das mit Fasern versehene Massepolymer in Schritt (c) UVpolymerisiert wird.

20. Verfahren nach Anspruch 15, wobei das mit Fasern versehene Massepolymer auf dem ersten Substrat eine Dicke von mindestens etwa 25 mils aufweist.

21. Verfahren nach Anspruch 15, wobei das mit Fasern versehene Massepolymer ein Molekulargewicht von etwa 800.000 bis etwa 1 Million aufweist.

22. Verfahren nach Anspruch 15, wobei die polymerisierbare Klebstoffzusammensetzung Acrylmonomere umfasst.

23. Mit Fasern versehenes Klebstoffübertragungsband, umfassend eine Klebstoffschicht mit Glasfasern, wobei die Glasfasern eine mittlere Faserlänge von etwa 10 mils (0,25 mm) bis etwa 60 mils (1,50 mm) und einen Faserlängenbereich von etwa 1 mils (0,025 mm) bis etwa 100 mils (2,50 mm) aufweisen und wobei das Übertragungsband abgebbar ist.

24. Mit Fasern versehenes Klebstoffübertragungsband mit einer mit Fasern versehenen Klebstoffschicht, das durch das folgende Verfahren hergestellt wird:
(a) Einbringen von Glasfasern in eine polymerisierbare Acrylklebstoffzusammensetzung, um eine auftragbare Klebstoffzusammensetzung zu bilden,
(b) Auftragen der auftragbaren Klebstoffzusammensetzung auf ein erstes Substrat,
(c) Polymerisieren der auftragbaren Klebstoffzusammensetzung, um auf dem ersten Substrat ein mit Fasern versehenes Massepolymer zu erzeugen, und
(d) Entfernen des mit Fasern versehenen Massepolymers von dem ersten Substrat und Extrudieren des mit Fasern versehenen Massepolymers auf ein zweites Substrat, um darauf eine mit Fasern versehene Klebstoffschicht zu bilden, wobei die Fasern in der Klebstoffschicht einen Medianwert der Faserlänge von etwa 10 mils (0,25 mm) bis etwa 60 mils (1,50 mm) und einen Faserlängenbereich von etwa 1 mils (0,025 mm) bis etwa 100 mils (2,50 mm) aufweisen.

25. Übertragungsband nach Anspruch 24, wobei das Band abgebbar ist.

## Revendications

1. Procédé de fabrication d'une composition fibreuse comprenant les étapes consistant à :
(a) procurer une composition apte au revêtement comprenant une composition adhésive polymérisable et des fibres inorganiques ;
(b) polymériser la composition apte au revêtement en vue de produire un polymère en vrac fibreux ; et
(c) appliquer par thermofusion le polymère en vrac fibreux sur un substrat en vue de former une couche adhésive fibreuse.

2. Procédé selon la revendication 1, dans lequel la fibre dans la couche adhésive présente une longueur de fibre moyenne d'environ 10 millièmes de pouce (0,25 mm) à environ 60 millièmes de pouce (1, 50 mm), et une plage de longueur de fibre d'environ 1 millième de pouce (0,025 mm) à environ 100 millièmes de pouce (2,50 mm).

3. Procédé selon la revendication 1, dans lequel la composition adhésive polymérisable comprend moins d'environ 1 % en poids de solvant.

4. Procédé selon la revendication 1, dans lequel les fibres inorganiques sont choisis parmi les groupes constitués de fibres de verre, de fibres céramiques et de leurs combinaisons.

5. Procédé selon la revendication 1, dans lequel les fibres inorganiques sont des fibres de verre.

6. Procédé selon la revendication 2, dans lequel les fibres inorganiques sont des fibres de verre.

7. Procédé selon la revendication 1, dans lequel l'étape (a) comprend en outre l'application de la composition apte au revêtement sur un deuxième substrat.

8. Procédé selon la revendication 7, dans lequel le deuxième substrat est une doublure antiadhésive.

9. Procédé selon la revendication 1, dans lequel la composition polymérisable présente un poids moléculaire inférieure à environ 1,5 million.

10. Procédé selon la revendication 1, dans lequel l'étape (d) comprend en outre la réticulation de la couche adhésive fibreuse par exposition à une énergie choisie parmi des UV, un faisceau e, des rayons gamma et une énergie thermique.

11. Procédé selon la revendication 10, dans lequel l'énergie est les UV.

12. Procédé selon la revendication 1, dans lequel l'étape (c) comprend l'extrusion du polymère en vrac fibreux sur le substrat.

13. Procédé selon la revendication 1, dans lequel la composition adhésive est une composition adhésive autocollante.

14. Procédé selon la revendication 1, dans lequel le premier substrat est une doublure antiadhésive.

15. Procédé de fabrication d'un adhésif fibreux comprenant les étapes consistant à :
(a) introduire des fibres de verre dans une composition adhésive polymérisable en vue de former une composition adhésive apte au revêtement ;
(b) appliquer la composition adhésive apte au revêtement sur un premier substrat ;
(c) polymériser la composition adhésive apte au revêtement en vue de produire un polymère en vrac fibreux sur le premier substrat ; et
(d) retirer le polymère en vrac fibreux du premier substrat et extruder le polymère en vrac fibreux sur un deuxième substrat en vue de former une couche adhésive fibreuse par-dessus.

16. Procédé selon la revendication 15, dans lequel les fibres dans la couche adhésive présentent une longueur de fibre moyenne d'environ 10 millièmes de pouce (0,25 mm) à environ 60 millièmes de pouce (1,50 mm), et une plage de longueur de fibre d'environ 1 millième de pouce (0,025 mm) à environ 100 millièmes de pouce (2,50 mm).

17. Procédé selon la revendication 15, dans lequel la composition adhésive polymérisable comprend moins d'environ 1 % en poids de solvant.

18. Procédé selon la revendication 1, dans lequel l'étape (a) comprend en outre l'application de la composition apte au revêtement sur un deuxième substrat.

19. Procédé selon la revendication 15, dans lequel le polymère en vrac fibreux est polymérisé par UV dans l'étape (c).

20. Procédé selon la revendication 15, dans lequel le polymère en vrac fibreux sur le premier substrat présente une épaisseur d'au moins environ 25 millièmes de pouce.

21. Procédé selon la revendication 15, dans lequel le polymère en vrac fibreux présente un poids moléculaire d'environ 800.000 à environ 1 million.

22. Procédé selon la revendication 15, dans lequel la composition adhésive polymérisable comprend des monomères acryliques.

23. Ruban de transfert adhésif fibreux comprenant une couche adhésive avec des fibres de verre, où les fibres de verre présentent une longueur de fibre moyenne d'environ 10 millièmes de pouce (0,25 mm) à environ 60 millièmes de pouce (1,50 mm), et une plage de longueur de fibre d'environ 1 millième de pouce (0,025 mm) à environ 100 millièmes de pouce (2,50 mm), où le ruban de transfert est apte à être distribué.

24. Ruban de transfert adhésif fibreux avec une couche adhésive fibreuse fabriquée par le procédé consistant à :
(a) introduire des fibres de verre dans une composition adhésive acrylique polymérisable en vue de former une composition adhésive apte au revêtement ;
(b) appliquer la composition adhésive apte au revêtement sur un premier substrat ;
(c) polymériser la composition adhésive apte au revêtement en vue de produire un polymère en vrac fibreux sur le premier substrat ; et
(d) retirer le polymère en vrac fibreux du premier substrat et extruder le polymère en vrac fibreux sur un deuxième substrat en vue de former une couche adhésive fibreuse par-dessus, où les fibres dans la couche adhésive présentent une longueur de fibre médiane d'environ 10 millièmes de pouce (0,25 mm) à environ 60 millièmes de pouce (1,50 mm), et une plage de longueur de fibre d'environ 1 millième de pouce (0,025 mm) à environ 100 millièmes de pouce (2,50 mm).

25. Ruban de transfert selon la revendication 24, où le ruban est apte à être distribué.
